(19) Europäisches Patentamt
European Patent Office
Office européen des brevets

(11) Veröffentlichungsnummer : **0 169 395**
**B1**

(12) # EUROPÄISCHE PATENTSCHRIFT

(45) Veröffentlichungstag der Patentschrift : **02.03.88**

(21) Anmeldenummer : **85107882.4**

(22) Anmeldetag : **25.06.85**

(51) Int. Cl.⁴ : **C 08 F212/06**, D 21 H 1/28 // (C08F212/06, 220:02, 220:12, 236:06)

(54) **Verfahren zur Herstellung von stabilen wässrigen Polymerdispersionen, die eine alkenylaromatische Verbindung einpolymerisiert enthalten.**

(30) Priorität : **28.06.84 DE 3423765**

(43) Veröffentlichungstag der Anmeldung : **29.01.86 Patentblatt 86/05**

(45) Bekanntmachung des Hinweises auf die Patenterteilung : **02.03.88 Patentblatt 88/09**

(84) Benannte Vertragsstaaten : **AT BE CH DE FR GB IT LI NL SE**

(56) Entgegenhaltungen :
**BE-A- 674 672**
**US-A- 2 378 089**

(73) Patentinhaber : **BASF Aktiengesellschaft**
**Carl-Bosch-Strasse 38**
**D-6700 Ludwigshafen (DE)**

(72) Erfinder : **Bubam, Hans-Georg, Dr.**
**Dhauner Strasse 40**
**D-6700 Ludwigshafen (DE)**
Erfinder : **Heider, Lothar, Dr.**
**Wolframstrasse 13**
**D-6700 Ludwigshafen (DE)**
Erfinder : **Biederbeck, Uwe**
**Am Speyerweg 52**
**D-6704 Mutterstadt (DE)**
Erfinder : **Stanger, Bernd, Dr.**
**Habichtstrasse 18**
**D-6724 Dudenhofen (DE)**

**EP 0 169 395 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Um beispielsweise stabile wäßrige Dispersionen auf Basis von Styrol und Acrylestern oder Butadien herzustellen, polymerisiert man die den Copolymerisaten zugrundeliegenden Monomeren bekanntlich in wäßriger Emulsion unter Verwendung von Polymerisationsinitiatoren und Emulgatoren sowie gegebenenfalls Polymerisationsreglern. Man benötigt ca. 2 bis 5 Gew.%, bezogen auf die Monomeren, eines Emulgators, damit die bei der Polymerisation entstehenden Polymerisatteilchen im wäßrigen Medium dispergiert bleiben. Der relativ hohe Emulgatorgehalt der wäßrigen Polymerdispersionen erniedrigt die Oberflächenspannung der Dispersionen und ist dafür verantwortlich, daß die Dispersionen bei der Verarbeitung mehr oder weniger stark schäumen. Werden solche Dispersionen als Bindemittel in Papierstreichmassen verwendet, so verringert der Emulgatorgehalt die Bindekraft des Bindemittels und die Wasserfestigkeit der mit diesen Papierstreichmassen gestrichenen Papiere.

Es ist außerdem bekannt, Polymerdispersionen in Abwesenheit von Emulgatoren oder in Gegenwart von geringen Mengen an Emulgatoren herzustellen. Bei der Herstellung emulgatorfreier bzw. emulgatorarmer Polymerdispersionen erhält man jedoch eine höhere Menge an Koagulat als bei der Herstellung von Dispersionen mit hohem Emulgatorgehalt.

Aufgabe der Erfindung ist es, stabile emulgatorarme bzw. emulgatorfreie Dispersionen zur Verfügung zu stellen, die bei der Verarbeitung nur wenig schäumen. Eine weitere Aufgabe der Erfindung besteht darin, den Koagulatanfall bei der Herstellung der Dispersionen gegenüber den bekannten Verfahren zu vermindern. Außerdem sollen Dispersionen zur Verfügung gestellt werden, die beispielsweise bei der Anwendung als Bindemittel in Papierstreichmassen verglichen mit bekannten Bindemitteln, die Wasserfestigkeit der damit gestrichenen Papiere erhöhen.

Die Aufgaben werden erfindungsgemäß gelöst mit einem Verfahren zur Herstellung von stabilen wäßrigen Polymerdispersionen, die eine alkenylaromatische Verbindung einpolymerisiert enthalten, durch Polymerisieren von Monomerenmischungen, die

a) mindestens 2 Gew.% einer alkenylaromatischen Verbindung,

b) 0,5 bis 10 Gew.% einer ethylenisch ungesättigten $C_3$- bis $C_5$-Carbonsäure und/oder eines Amids und/oder eines Nitrils einer ethylenisch ungesättigten $C_3$- bis $C_5$-Carbonsäure und/oder eines Sulfonsäuregruppen enthaltenden ethylenisch ungesättigten Monomeren und gegebenenfalls

c) Acrylsäureester, Methacrylsäureester und/oder Butadien.

enthalten, in wäßriger Emulsion in Gegenwart von Polymerisationsinitiatoren sowie 0 bis 0,6 Gew.%, bezogen auf die Monomeren, eines Emulgators und gegebenenfalls Polymerisationsreglern, wenn man die Polymerisation, bezogen auf die Monomeren, in Gegenwart von 0,2 bis 5 Gew.% Formaldehyd bei einem pH-Wert unterhalb von 7 durchführt.

Als Monomere der Gruppe a) werden alkenylaromatische Verbindungen eingesetzt, die beispielsweise mit Hilfe der Formel

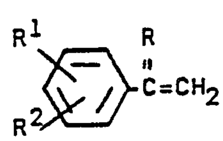

in der R = H, $CH_3$ und $R^1$, $R^2$ = H, $CH_3$, $C_2H_5$, $C_3H_7$ ist, charakterisiert werden können. Vorzugsweise setzt man aus dieser Monomergruppe Styrol ein. Die Monomeren a) sind zu mindestens 2 Gew.% in der Monomermischung enthalten. Ihr Anteil darin kann bis zu 99 Gew.% betragen und liegt vorzugsweise in dem Bereich von 20 bis 70 Gew.%.

Monomere der Gruppe b) sind ethylenisch ungesättigte $C_3$- bis $C_5$-Carbonsäuren und/oder deren Amide und/oder Nitrile und/oder Sulfonsäuregruppen enthaltende ethylenisch ungesättigte Monomere. Im einzelnen handelt es sich hierbei um folgende Verbindungen : Acrylsäure, Methacrylsäure, Itaconsäure, Maleinsäure, Fumarsäure, Acrylamid, Methacrylamid, Acrylnitril, Methacrylnitril, Vinylsulfonat und Verbindungen der Formel.

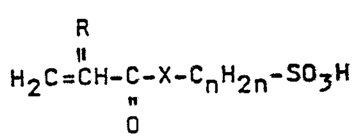
(II)

in der R = H, $CH_3$ ; X = -O-, -NH- ; n = 1 bis 5 bedeutet.

Geeignete Sulfoester der Formel (II) sind beispielsweise 1-Sulfo-2-propylacrylat, 2-Sulfo-1-propylacrylat, 2-Sulfo-1-propylmethacrylat, 2-Sulfo-1-butylacrylat und -methacrylat, 1-Sulfo-2-butylacrylat und -methacrylat, 3-Sulfo-2-butylacrylat und -methacrylat, 2-Methyl-2-sulfo-1-propylacrylat, 2-Methyl-1-sulfo-2-propylacrylat, 3-Sulfo-1-propylacrylat, 3-Sulfo-1-butylacrylat, 4-Sulfo-1-butylacrylat und -methacrylat.

Sulfoalkylamide der Formel (II) sind beispielsweise 2-Acrylamido-propansulfonsäure, 2-Acrylamidoethansulfonsäure, 2-Methacrylamidoethansulfonsäure, 4-Acrylamidobutansulfonsäure-1, 3-Acrylamidopropansulfonsäure, 3-Methacrylamidopropansulfonsäure und Acrylamidoneopenthylsulfonsäure.

Von den genannten Sulfonsäuregruppen enthaltenden ethylenisch ungesättigten Monomeren verwendet man vorzugsweise 2-Acrylamido-2-methylpropansulfonsäure.

Außer den bereits genannten Amiden ethylenisch ungesättigter $C_3$- bis $C_5$-Carbonsäuren kommen auch Derivate dieser Amide in Betracht, z. B. N-Methylolacrylamid, N-Methylolmethacrylamid sowie die entsprechenden veretherten Methylolverbindungen, z. B. N-Methoxymethylacrylamid, N-Methoxymethylmethacrylamid, N-Ethoxymethylacrylamid, N-Ethoxymethylmethacrylamid und N-Butoxymethylacrylamid bzw. -methacrylamid.

Die Verbindungen der Gruppe b) können mit den anderen Monomergruppen allein oder in Mischung copolymerisiert werden. Die alleinige Verwendung von ethylenisch ungesättigten $C_3$- bis $C_5$-Carbonsäuren oder deren Mischungen, z. B. Gemische von Acrylsäure und Methacrylsäure bzw. von Acrylsäure und Itaconsäure, als Monomer der Gruppe b) ist bevorzugt.

Polymerdispersionen, die besonders wasserfeste Uberzüge bei der Anwendung als Bindemittel ergeben, erhält man, wenn man als Komponente b) Mischungen aus Acrylsäure und Acrylamid, Methacrylsäure und Acrylamid, Acrylsäure und Methacrylamid, Methacrylsäure und Methacrylamid, Acrylsäure und N-Methylolacrylamid oder Acrylsäure und N-Methylolmethacrylamid verwendet. Die bei der Polymerisation eingesetzten Monomerenmischungen enthalten 0,5 bis 10, vorzugsweise 1 bis 5 Gew.%, mindestens eines Monomeren der Gruppe b).

Als Monomere der Gruppe c) verwendet man Acrylsäureester, Methacrylsäure-ester und/oder Butadien-1,3. Die Ester leiten sich von Alkoholen mit 1 bis 9 C-Atomen ab. Vorzugsweise verwendet man die Ester einwertiger Alkohole. Geeignete Acrylsäureester sind beispielsweise Acrylsäuremethylester, Acrylsäureethylester, Acrylsäure-n-propylester, Acrylsäure-isopropylester, Acrylsäure-n-butylester, Acrylsäureisobutylester, Acrylsäurehexylester, Acrylsäure-2-ethylhexylester und Acrylsäureoctylester. Entsprechende Ester der Methacrylsäure können ebenso verwendet werden wie Mischungen aus Acrylsäureestern und Methacrylsäureestern bzw. Acrylsäureester von unterschiedlichen Alkoholen, z. B. Acrylsäure-n-butylester und Acrylsäuremethylester. Die Monomeren der Gruppe c) sind bis zu 97,5 Gew.% in der Monomerenmischung enthalten. Neben den Estern einwertiger Alkohole kann man auch Acrylsäure- und Methacrylsäureester von zweiwertigen Alkoholen verwenden, z. B. Hydroxyethylacrylat, Hydroxyethylmethacrylat, Hydroxypropylacrylat, Hydroxypropylmethacrylat, Hydroxybutylacrylat und Hydroxybutylmethacrylat. Es können auch Mischungen aus einem Acrylester und Butadien bzw. aus einem Acrylester und Methacrylester polymerisiert werden. Die Monomeren der Komponente c) sind vorzugsweise zu 79,5 bis 20 Gew.% am Aufbau der Copolymerisate beteiligt.

Als Polymerisationsinitiatoren werden die für die Emulsionspolymerisation ethylenisch ungesättigter Verbindungen üblichen peroxidischen Verbindungen verwendet, z. B. Wasserstoffperoxid, wie tert.-Butylhydroperoxid, Cumolhydroperoxid oder Pinanhydroperoxid.

Außerdem eignen sich als Polymerisationsinitiatoren Redoxkatalysatoren, z. B. Gemische aus Wasserstoffperoxid und Ascorbinsäure, Natriumbisulfit und tert.-Butylhydroperoxid, Anlagerungsprodukte von Alkalibisulfiten an Formaldehyd oder Ketone in Mischung mit peroxidischen Verbindungen, wie tert.-Butylhydroperoxid oder Wasserstoffperoxid, wobei man zur Erhöhung der Wirksamkeit dieser Polymerisationsinitiatoren Schwermetallsalze mitverwendet, z. B. Eisen-II-sulfat. Die Polymerisationsinitiatoren werden üblicherweise in einer Menge von 0,1 bis 1 Gew,%, bezogen auf die zu polymerisierenden Monomeren, eingesetzt.

Um die Monomeren in der wäßrigen Phase zu emulgieren und die bei der Polymerisation entstehende Dispersion von Polymerteilchen in Wasser zu stabilisieren, verwendet man, bezogen auf die Monomeren, bis zu 0,6 Gew.% eines Emulgators. Auch bei den Emulgatoren handelt es sich um bekannte Stoffe, z. B. die Alkalisalze von langkettigen Alkylsulfaten, die sich beispielsweise von Alkanen mit 10 bis 18 Kohlenstoffatomen ableiten, ethoxylierten Phenolen und ethoxylierten Phenolderivaten, die z. B. 2 bis 40 Ethylenoxideinheiten enthalten sowie Schwefelsäurehalbester von ethoxylierten Phenolen bzw. langkettigen Alkoholen.

Gegebenenfalls verwendet man bei dem erfindungsgemäßen Verfahren Polymerisationsregler, z. B. Dodecylmercaptan, Thioglykol, Thioglykolsäure, Tribrommethan oder Diisopropylxanthogendisulfid.

Bezogen auf die Monomeren verwendet man 0 bis 1 Gew.% eines Polymerisationsreglers. Die Polymerisationstemperatur liegt in dem Bereich von 40 bis 100° C, vorzugsweise 70 bis 90° C.

Gemäß Erfindung erfolgt die Polymerisation der Monomeren in Gegenwart von 0,2 bis 2, vorzugsweise 0,4 bis 0,8 Gew.% Formaldehyd bei einem pH-Wert unterhalb von 7. Der Formaldehyd kann als wäßrige Lösung, als Polymer (Polyformaldehyd) oder auch gasförmig in das Reaktionsgemisch eingebracht werden. Die Mitverwendung von Formaldehyd bei der Polymerisation bewirkt, daß der Koagulatanfall bei der Herstellung der Dispersion gegenüber den bekannten Herstellverfahren stark verringert ist.

Die nach dem erfindungsgemäßen Verfahren hergestellten Dispersionen zeichnen sich durch eine ungewöhnliche Stabilität sowie durch ein nur geringes Schäumen beim Verarbeiten aus. Gegenüber den

bekannten, in Abwesenheit von Formaldehyd hergestellten Dispersionen ergeben die nach dem erfindungsgemäßen Verfahren erhaltenen Dispersionen bei der Anwendung als Bindemittel in Papierstreichmassen gestrichene Papiere mit verbesserter Wasserfestigkeit. Die vorteilhaften Eigenschaften werden jedoch nur dann erhalten, wenn der pH-Wert während der Herstellung der Dispersion unterhalb von 7 liegt. Die Dispersionen sind selbst bei Polymergehalten von mehr als 40 Gew.% bis ca. 55 Gew.% stabil. Bindemitteldispersionen, die besonders wasserfeste gestrichene Papiere liefern, werden bei pH-Werten im Bereich von 1 bis 3 hergestellt. Der pH-Wert, bei dem die Polymerisation ablaufen soll, wird durch Zugabe einer organischen oder anorganischen Säure eingestellt. Geeignet zur pH-Einstellung sind beispielsweise Ameisensäure, Essigsäure, Propionsäure, Oxalsäure, Phosphorsäure, Salzsäure und Schwefelsäure. Vorzugsweise verwendet man Ameisensäure, Oxalsäure und Phosphorsäure.

Die oben beschriebenen Dispersionen werden als Bindemittel für Papierstreichmassen, als Verfestigungsmittel für Faservliese, zur Beschichtung von textilen und nichttextilen Flächengebilden, wie Folien, Papier und Pappe, verwendet. Wenn man die Dispersionen als Bindemittel für Papierstreichmassen einsetzt, benötigt man 2 bis 20 Gew.-Teile Polymerisat pro 100 Gew.-Teile eines feinteiligen Füllstoffs. Zur Einstellung der Viskosität der Papierstreichmassen kann man die üblichen Co-Binder mitverwenden.

Die in den Beispielen angegebenen Teile sind Gewichtsteile, die Angaben in Prozent beziehen sich, sofern nichts anderes angegeben, auf das Gewicht der Stoffe.

Beispiel 1

Man bereitete zunächst zwei verschiedene Zuläufe. Der Zulauf I bestand aus 380 Teilen Wasser, 20 Teilen einer 15 %igen wäßrigen Natriumlaurylsulfatlösung, 33 Teilen einer 30%igen wäßrigen Formaldehydlösung, 10 Teilen Acrylsäure und 990 Teilen Styrol. Der Zulauf II enthielt 8 Teile Natriumpersulfat in 310 Teilen Wasser gelöst.

In einem Rührkessel wurden 220 Teile Wasser, 2 Teile Natriumpersulfat und 5 Teile des Zulaufs I vorgelegt und auf eine Temperatur von 90° C erwärmt. Nachdem die Temperatur in der Vorlage auf 85° C angestiegen war, wurde mit der Zugabe der Zuläufe I und II begonnen. Beide Zuläufe wurden kontinuierlich in den Rührkessel gepumpt, wobei man für den Zulauf I 3 Stunden und für den Zulauf II 3,5 Stunden benötigte. Nachdem man den Zulauf II vollständig zudosiert hatte, erhitzte man das Reaktionsgemisch noch 1 Stunde lang auf 90° C. Aufgrund des Acrylsäuregehalts im Zulauf I lag der pH-Wert bei der Polymerisation unterhalb von 7. Man erhielt eine stabile, ca. 50 %ige wäßrige Polymerdispersion. Die Menge an Koagulat, das abfiltriert wurde, betrug 15 Teile. Die Polymerdispersion wird in einer Menge (bezogen auf Feststoffgehalt) von 2 bis 20 Teilen pro 100 Teile Pigment als Bindemittel für Papierstreichmassen verwendet.

Vergleichsbeispiel 1

Das Beispiel 1 wird mit der Ausnahme wiederholt, daß man im Zulauf I den Formaldehyd fortläßt. Man erhielt eine wäßrige Polymerdispersion, von der 105 Teile Koagulat abfiltriert wurden.

Beispiel 2

Man bereitet zunächst einen Zulauf I durch Mischen von 380 Teilen Wasser, 27 Teilen einer 15 %igen wäßrigen Natriumlaurylsulfatlösung, 10 Teilen einer 30 %igen wäßrigen Formaldehydlösung, 20 Teilen Methacrylamid, 300 Teilen n-Butylacrylat und 680 Teilen Styrol.

Der Zulauf II bestand aus einer wäßrigen Lösung von 8 Teilen Natriumpersulfat in 310 Teilen Wasser.

In einem Rührkessel legte man 220 Teile Wasser, 2 Teile Natriumpersulfat und 5 Teile des Zulaufs I vor und erhitzte die Mischung auf eine Temperatur von 90° C. Nachdem die Temperatur der Mischung 85° C betrug, begann man, die Zuläufe I und II zuzugeben. Die Zulaufzeit betrug für den Zulauf I 3 Stunden und für den Zulauf II 3,5 Stunden. Nachdem der Zulauf II zudosiert war, hielt man das Reaktionsgemisch noch 1 Stunde bei einer Temperatur von 90° C. Der pH-Wert betrug 4. Es resultierte eine stabile, ca. 50%ige Polymerdispersion. Die Menge an abfiltrierbarem Koagulat lag bei 8 Teilen. Die Dispersion wird als Bindemittel für Papierstreichmassen verwendet.

Vergleichsbeispiel 2

Das Beispiel 2 wurde mit der Ausnahme wiederholt, daß man Formaldehyd im Zulauf I fortließ und Styrol durch die gleiche Menge an n-Butylacrylat ersetzte. In diesem Fall betrug die Menge an abfiltrierbarem Koagulat 70 Teile.

Beispiel 3

Man stellte zunächst drei verschiedene Zuläufe her. Zulauf I war eine Mischung von 940 Teilen n-Butylacrylat, 50 Teilen Styrol und 10 Teilen Acrylsäure.

Zulauf II bestand aus einer wäßrigen Lösung von 5 Teilen Natriumpersulfat in 66 Teilen Wasser.

Zulauf III war eine Mischung von 17 Teilen einer 30 %igen wäßrigen Formaldehydlösung und 33 Teilen Wasser.

In einem Rührkessel wurden unter Ausschluß von Sauerstoff 850 Teile Wasser auf eine Temperatur von 80° C erhitzt. Bei dieser Temperatur gab man 28 Teile des Zulaufs II zu. Anschließend führte man dem Rührkessel die Zuläufe I, II und III im Verlauf von 2 Stunden gleichzeitig unter guter Durchmischung zu. Die Reaktionstemperatur wurde auf 80° C eingestellt. Nach Beendigung der Zugabe der Zuläufe wurde das Reaktionsgemisch noch 1 Stunde auf 80° C erhitzt. Aufgrund des Acrylsäuregehalts im Zulauf I lag der pH-Wert während der Polymerisation unterhalb von 7. Man erhielt dann eine stabile, ca. 50 %ige Polymerdispersion. Die Menge an abfiltrierbarem Koagulat lag bei 20 Teilen. Die Polymerdispersion wird als Bindemittel für Papierstreichmassen verwendet.

Vergleichsbeispiel 3

Das Beispiel 3 wurde mit den Ausnahem wiederholt, daß man Styrol und Formaldehyd fortließ, wobei man das Styrol durch n-Butylacrylat ersetzte. Man erhielt eine wenig stabile Polymerdispersion aus der 280 Teile Koagulat abfiltriert werden konnten.

Beispiel 4

Man stellt zunächst einen Zulauf I durch Mischung der folgenden Monomeren her : 395 Teile 2-Ethylhexylacrylat, 395 Teile n-Butylacrylat, 200 Teile Styrol und 10 Teile Acrylsäure. Als Zuläufe II und III verwendet man die im Beispiel 3 angegebenen Zuläufe gleicher Numerierung und führte die Polymerisation unter den im Beispiel 3 angegebenen Bedingungen durch. Die Polymerisation erfolgte bei pH 4 bis 3. Man erhielt eine stabile, ca. 50%ige wäßrige Polymerdispersion. Die Menge an abfiltrierbarem Koagulat lag bei 10 Teilen. Die Polymerdispersion wird als Bindemittel für Faservliese verwendet.

Vergleichsbeispiel 4

Das Beispiel 4 wurde mit den Ausnahmen wiederholt, daß man die Polymerisation in Abwesenheit von Styrol und Formaldehyd durchführte, jedoch das Styrol durch n-Butylacrylat ersetzte. Man erhielt eine wenig stabile wäßrige Polymerdispersion aus der 300 Teile Koagulat abfiltriert werden konnten.

Beispiel 5

Man stellte zunächst einen Zulauf I durch Mischen folgender Bestandteile her : 480 Teile n-Butylacrylat, 100 Teilen Methylmethacrylat, 400 Teilen Styrol, 10 Teilen Acrylamid und 10 Teilen Acrylsäure.

Die Zuläufe II und III, die im Beispiel 3 angegeben sind, wurden auch hier verwendet. Die Polymerisation erfolgte unter den im Beispiel 3 angegebenen Bedingungen. Der pH-Wert der Vorlage wurde durch Zugabe von 0,3 Teilen Phosphorsäure auf 1,5 eingestellt. Man erhielt eine 50 %ige stabile Polymerdispersion. Die Menge an abfiltierbarem Koagulat lag bei 5 Teilen. Die erhaltene Dispersion wird als Bindemittel für Papierstreichmassen verwendet und ergibt dabei gestrichene Papiere, die eine sehr hohe Wasserfestigkeit aufweisen.

Vergleichsbeispiel 5

Das Beispiel 5 wird mit den Ausnahmen wiederholt, daß man Styrol und Formaldehyd fortläßt, jedoch die Styrolmenge durch n-Butylacrylat ersetzte, so erhielt man eine wenig stabile Polymerdispersion. Die Menge an abfiltrierbarem Koagulat betrug 180 Teile. Verwendet man die so hergestellte Dispersion als Bindemittel für Papierstreichmassen, so erhält man gestrichene Papiere, deren Wasserfestigkeit auffallend geringer ist als diegenige von Papieren, die unter Einsatz eines Polymerisats gemäß Beispiel 5 hergestellt werden.

Beispiel 6

In einem druckfesten Polymerisationsreaktor wurden 1900 Teile einer 50 %igen wäßrigen Natriumlaurylsulfatlösung und 30 Teile t-Butylhydroperoxid vorgelegt. Der Reaktor wurde anschließend zweimal mit Stickstoff gespült und darauf evakuiert.

In einem Meßgefäß (Zulauf I) wurden dann 4360 Teile Wasser, 160 Teile Itaconsäure, 16 Teile Natriumpyrophosphat, 100 Teile einer 15 %igen wäßrigen Natriumlaurylsufatlösung, 213 Teile einer 30 %igen wäßrigen Formaldehydlösung, 36 Teile t-Dodecylmercaptan, 247 Teile Acrylsäure und 4160 Teile Styrol gut gemischt. Das Mischgefäß wurde anschließend mit Stickstoff gespült und mit 3440 Teile Butadien versetzt und von dieser Monomeren-Emulsion (Zulauf I) gab man dann 1510 Volumenteile in den Polymerisationsreaktor und erhitzte diesen Teil des Zulaufs I auf eine Temperatur von 90° C. Bereits bei einer Temperatur von 80° C wurden kontinuierlich Zulauf I und Zulauf II in den Reaktor gepumpt (der

Zulauf II bestand aus einer wäßrigen Lösung von 20 Teilen des Natriumsalzes der Hydroxymethansulfinsäure in 285 Teilen Wasser). Die Zuläufe I und II wurden innerhalb von 3 Sunden in den Reaktor gepumpt. Die Polymerisationstemperatur betrug 90° C, der pH-Wert lag zwischen 4 und 5. Nach Beendigung der Monomeren- und Initiatorzugabe polymerisierte man die Mischung noch 1 Sunde bei einer Temperatur von 90° C nach. Man erhielt eine stabile, ca. 50%ige Polymerdispersion aus der nur 30 Teile eines Koagulats abfiltriert werden konnten und die als Bindemittel für Papierstreichmassen verwendet wird.

Vergleichsbeispiel 6

Das Beispiel 6 wurde mit der Ausnahme wiederholt, daß man in Abwesenheit von Formaldehyd arbeitete. Man erhielt eine wenig stabile Polymerdispersion, aus der 700 Teile eines Koagulats abfiltriert werden konnten.

Beispiel 7

Man stellte zunächt einen Zulauf I durch Mischung der folgenden Monomeren her : 395 Teile Methylacrylat, 395 Teile n-Butylacrylat, 200 Teile Styrol und 10 Teile Acrylsäure. Als Zuläufe II und III verwendet man die im Beispiel 3 angegebenen Zuläufe gleicher Numerierung und führte die Polymerisation unter den im Beispiel 3 angegebenen Bedingungen durch. Die Polymerisation erfolgte bei pH 4 bis 3. Man erhielt eine stabile, ca. 50 %ige wäßrige Polymerdispersion. Die Menge an abfiltrierbarem Koagulat lag bei 1 Teil. Die Dispersion wird als Bindemittel für Papierstreichmassen verwendet.

Vergleichsbeispiel 7

Das Beispiel 4 wurde mit den Ausnahmen wiederholt, daß man die Polymerisation in Abwesenheit von Styrol und Formaldehyd durchführte, jedoch das Styrol durch n-Butylacrylat ersetzte. Man erhielt eine wenig stabile wäßrige Polymerdispersion aus der 300 Teile Koagulat abfiltriert werden konnten.

Beispiel 8

Man stellte zunächst einen Zulauf I durch Mischen folgender Bestandteile her : 480 Teile n-Butylacrylat, 100 Teilen Methylacrylat, 400 Teilen Styrol, 10 Teilen Acrylamid und 10 Teilen Acrylsäure.

Die Zuläufe II und III, die im Beispiel 3 angegeben sind, wurden auch hier verwendet. Die Polymerisation erfolgte unter den im Beispiel 3 angegebenen Bedingungen. Der pH-Wert der Vorlage wurde durch Zugabe von 0,3 Teilen Phosphorsäure auf 1,5 eingestellt. Man erhielt eine 50 %ige stabile Polymerdispersion. Die Menge an abfiltrierbarem Koagulat lag bei 5 Teilen. Die so erhaltene Dispersion wird als Bindemittel für die Vliesverfestigung eingesetzt und führt zu Vliesen mit hoher Wasserfestigkeit.

Vergleichsbeispiel 8

Das Beispiel 8 wurde mit den Ausnahmen wiederholt, daß man Styrol und Formaldehyd fortließ, jedoch die gesamte Styrolmenge durch n-Butylacrylat ersetzte, so erhielt man eine wenig stabile Polymerdispersion. Die Menge an abfiltrierbarem Koagulat betrug 180 Teile.

**Patentansprüche**

1. Verfahren zur Herstellung von stabilen wäßrigen Polymerdispersionen, die eine alkenylaromatische Verbindung einpolymerisiert enthalten, durch Copolymerisieren von Monomerenmischungen, die

a) mindestens 2 Gew.% einer alkenylaromatischen Verbindung,

b) 0,5 bis 10 Gew.% einer ethylenisch ungesättigten $C_3$- bis $C_5$-Carbonsäure und/oder eines Amids und/oder eines Nitrils einer ethylenisch ungesättigten $C_3$- bis $C_5$-Carbonsäure und/oder eines Sulfonsäuregruppen enthaltenden ethylenisch ungesättigten Monomeren und gegebenenfalls

c) Acrylsäureester, Methacrylsäureester und/oder Butadien

enthalten, in wäßriger Emulsion in Gegenwart von Polymerisationsinitiatoren sowie 0 bis 0,6 Gew.%, bezogen auf die Monomeren, eines Emulgators und gegebenenfalls Polymerisationsreglern, dadurch gekennzeichnet, daß man die Polymerisation, bezogen auf die Monomeren, in Gegenwart von 0,2 bis 2 Gew.% Formaldehyd bei einem pH-Wert unterhalb von 7 durchführt.

2. Verfahren nach Anspruch 1, dadurch gekennzeichnet, daß an Monomerenmischungen aus

a) 2 bis 99 Gew.% Styrol,

b) 0,5 bis 10 Gew.% einer ethylenisch ungesättigten $C_3$- bis $C_5$-Carbonsäure, eines Amids und/oder Nitrils einer ethylenisch ungesättigten $C_3$- bis $C_5$-Carbonsäure und/oder eines Sulfonsäuregruppen enthaltenden ethylenisch ungesättigten Monomeren und gegebenenfalls

c) bis zu 97,5 Gew.% Acrylester, Methacrylester und/oder Butadien

copolymerisiert.

3. Verfahren nach den Ansprüchen 1 und 2, dadurch gekennzeichnet, daß der pH-Wert während der Polymerisation 1 bis 3 beträgt.

4. Verfahren nach den Ansprüchen 1 bis 3, dadurch gekennzeichnet, daß man Monomerenmischungen aus

a) 20 bis 70 Gew.% Styrol,

b) 0,5 bis 10 Gew.% Acrylsäure, Methacrylsäure und/oder Itaconsäure und

c) 79,5 bis 20 Gew.% eines Acrylsäureesters eines 1 bis 9 C-Atome enthaltenden Alkohols und/oder Butadien

copolymerisiert.

**Claims**

1. A process for the preparation of a stable aqueous polymer dispersion which contains an alkenyl-aromatic compound as copolymerized units, by copolymerization of a monomer mixture which contains

a) not less than 2 % by weight of an alkenyl-aromatic compound,

b) from 0.5 to 10 % by weight to an ethylenically unsaturated $C_3$-$C_5$-carboxylic acid and/or of an amide and/or of a nitrile of an ethylenically unsaturated $C_3$-$C_5$-carboxylic acid and/or of an ethylenically unsaturated monomer containing sulfonic acid groups, with or without

c) acrylic acid esters, methacrylic acid esters and/or butadiene

in an aqueous emulsion in the presence of a polymerization initiator and of from 0 to 0.6 % by weight, based on monomers, of an emulsifier, with or without a polymerization regulator, wherein the polymerization is carried out in the presence of from 0.2 to 2 % by weight of formaldehyde, based on monomers, at a pH below 7.

2. A process as claimed in claim 1, wherein a monomer mixture of

a) from 2 to 99 % by weight of styrene,

b) from 0.5 to 10 % by weight of an ethylenically unsaturated $C_3$-$C_5$-carboxylic acid, an amide and/or a nitrile of an ethylenically unsaturated $C_3$-$C_5$-carboxylic acid and/or an ethylenically unsaturated monomer containing sulfonic acid groups, with or without

c) not more than 97.5 % by weight of an acrylic acid ester, methacrylic acid ester and/or butadiene

is copolymerized.

3. A process as claimed in claim 1 or 2, wherein the pH during polymerization is from 1 to 3.

4. A process as claimed in claim 1 or 2 or 3, wherein a monomer mixture of

a) from 20 to 70 % by weight of styrene,

b) from 0.5 to 10 % weight of acrylic acid, methacrylic acid and/or itaconic acid and

c) from 79.5 to 20 % by weight of an acrylic acid ester of an alcohol of 1 to 9 carbon atoms, and/or of butadiene

is copolymerized.

**Revendications**

1. Procédé de préparation de dispersions aqueuses stables de polymères, dans lesquels est copolymérisé un composé alcényl-aromatique, par une copolymérisation d'un mélange de monomères, composé

a) d'au moins 2 % en poids d'un composé alcényl-aromatique et

b) de 0,5 à 10 % en poids d'un acide carboxylique en $C_3$ à $C_5$ à insaturation éthylénique et(ou) d'un amide et(ou) d'un nitrile d'un acide carboxylique en $C_3$ à $C_5$ à insaturation éthylénique et(ou) d'un monomère à insaturation éthylénique, contenant des groupes acide sulfonique, ainsi qu'éventuellement

c) d'esters de l'acide acrylique ou de l'acide méthacrylique et(ou) de butadiène,

en émulsion aqueuse en présence d'amorceurs de la polymérisation, de 0 à 0,6 % du poids des monomères d'un émulsionnant et éventuellement de régulateurs de la polymérisation, caractérisé en ce que la polymérisation est réalisée à un pH inférieur à 7 en présence de 0,2 à 2 % du poids des monomères de formaldéhyde.

2. Procédé suivant la revendication 1, caractérisé en ce que l'on copolymérise des mélanges de monomères comprenant

a) 2 à 99 % en poids de styrène et

b) 0,5 à 10 % en poids d'un acide carboxylique en $C_3$ à $C_5$ à insaturation éthylénique, d'un amide et(ou) d'un nitrile d'un acide carboxylique en $C_3$ à $C_5$ à insaturation éthylénique et(ou) d'un monomère à insaturation éthylénique, contenant des groupes acide sulfonique, ainsi qu'éventuellement

c) jusqu'à 97,5 % en poids d'acrylate, de méthacrylate et(ou) de butadiène.

3. Procédé suivant les revendications 1 et 2, caractérisé en ce que le pH est maintenu entre 1 et 3 durant la polymérisation.

4. Procédé suivant les revendications 1 à 3, caractérisé en ce que l'on copolymérise des mélanges de monomères comprenant

a) 20 à 70 % en poids de styrène,

b) 0,5 à 10 % en poids d'acide acrylique, d'acide méthacrylique et(ou) d'acide itaconique et

c) 79,5 à 20 % en poids d'un ester de l'acide acrylique et d'un alcool en $C_1$ à $C_9$ et(ou) de butadiène.